**Europäisches Patentamt**

**European Patent Office**

**Office européen des brevets**

(19)

(11) Veröffentlichungsnummer: **0 235 382**
**B1**

(12) ## EUROPÄISCHE PATENTSCHRIFT

(45) Veröffentlichungstag der Patentschrift:
07.02.90

(51) Int. Cl.⁴: **F16D 65/12**

(21) Anmeldenummer: **86117367.2**

(22) Anmeldetag: **12.12.86**

---

(54) **Befestigungsvorrichtung für eine Bremsscheibe.**

---

(30) Priorität: **22.02.86 DE 3605806**

(43) Veröffentlichungstag der Anmeldung:
**09.09.87 Patentblatt 87/37**

(45) Bekanntmachung des Hinweises auf die Patenterteilung:
**07.02.90 Patentblatt 90/6**

(84) Benannte Vertragsstaaten:
**DE FR GB IT SE**

(56) Entgegenhaltungen:
**DE-A- 2 201 885**
**DE-A- 2 806 028**
**DE-A- 2 906 589**
**DE-B- 1 158 095**
**DE-B- 1 221 664**
**FR-A- 2 266 052**
**US-A- 3 542 166**
**US-A- 4 049 085**

(73) Patentinhaber: **Dr.Ing.h.c. F. Porsche
Aktiengesellschaft, Porschestrasse 42,
D-7000 Stuttgart 40(DE)**

(72) Erfinder: **Martin, Roland, Dipl.-Ing. FH,
Bahnhofstrasse 33, D-7251 Weissach(DE)**
Erfinder: **Reitter, Horst, Am Pfarrtor 5,
D-7253 Renningen(DE)**

**Beschreibung**

Die Erfindung bezieht sich auf eine Befestigungsvorrichtung für eine Bremsscheibe nach dem Oberbegriff des Anspruchs 1.

Es ist aus der DE-A 2 201 885 eine Befestigungsvorrichtung für eine Bremsscheibe an einer Radnabe bekannt, bei der die Bremsscheibe am inneren radialen Rand Schlitze aufweist, in die axial erstreckende Nasen an der Radnabe eingreifen und eine klauenartige Verbindung herstellen. über Schraubmittel wird die Radnabe mit der Bremsscheibe kraftschlüssig verbunden. Die in die Schlitze der Bremsscheibe eingreifenden Nasen der Radnabe führen im Betrieb zu Kerbwirkungen und Spannungen in den Schlitzen, insbesondere bei einer Wärmeausdehnung an der Radnabe, was zu Rissen führt, die sich, ausgehend von den Schlitzen, bis in die Bremsfläche erstrecken und diese im Bremsverhalten ungünstig beeinflussen bzw. die Bremsscheibe unbrauchbar machen.

Es ist Aufgabe der Erfindung eine verbesserte Verbindung zwischen einer Bremsscheibe und einer Radnabe zu schaffen, mit der gleichzeitig auch eine geringstmögliche Kerbwirkung und Spannung, insbesondere bei sehr hohen Temperaturen, auf die Bremsscheibe erzielt wird.

Diese Aufgabe wird erfindungsgemäß durch die kennzeichnenden Merkmale des Anspruch 1 gelöst. Weitere vorteilhafte Ausbildungen der Erfindung beinhalten die Unteransprüche.

Die mit der Befestigungsvorrichtung hauptsächlich erzielten Vorteile bestehen darin, daß die Schlitze der Rastverbindung von der Bremsscheibe in die Radnabe verlegt sind und somit die Möglichkeit einer Rißbildung in der Bremsscheibe ausgeschlossen wird. Dies wird insofern noch gezielt unterstützt, indem Wärmespannungen in den Mitnehmerpunkten durch verschiedene Werkstoffe der Radnabe und der Bremsscheibe vermieden werden. Insbesondere soll der Wärmeausdehnungskoeffizient der Radnabe größer sein als der der Bremsscheibe. Hierdurch kann der formschlüssig in der Öffnung der Radnabe gehaltene Mitnehmer der Bremsscheibe keine wesentliche Kerbspannung ausüben und eine Ausweitung des Schlitzes und eine hierdurch bedingte nachfolgende Rißbildung wird unterbunden.

Auch wird durch die radialen und axialen Öffnungen des Schlitzes nach außen hin, insbesondere bei einer Ausdehnung des Mitnehmers in axialer Richtung, diesem keine Begrenzung wie nach der bekannten Ausführung entgegengesetzt, so daß eine freie Ausdehnung möglich wird.

Eine baulich einfach gestaltete Verbindung zwischen der Radnabe und der Bremsscheibe erfolgt über einen randseitigen Verbindungsflansch an der Radnabe. Dieser nimmt die Bremsscheibe über einen Befestigungsring zentrisch auf und stützt die Scheibe an der einen Stirnseite über einen Haltering ab, dem an der anderen Stirnseite ein Druckring gegenübersteht, der eine baulich einfache, axiale Scheibenfixierung gewährleistet.

Ein Ausführungsbeispiel der Erfindung ist in der Zeichnung dargestellt und wird im folgenden näher beschrieben.

Es zeigt

Fig. 1 und 2 eine Befestigungsvorrichtung einer Bremsscheibe nach dem Stand der Technik,

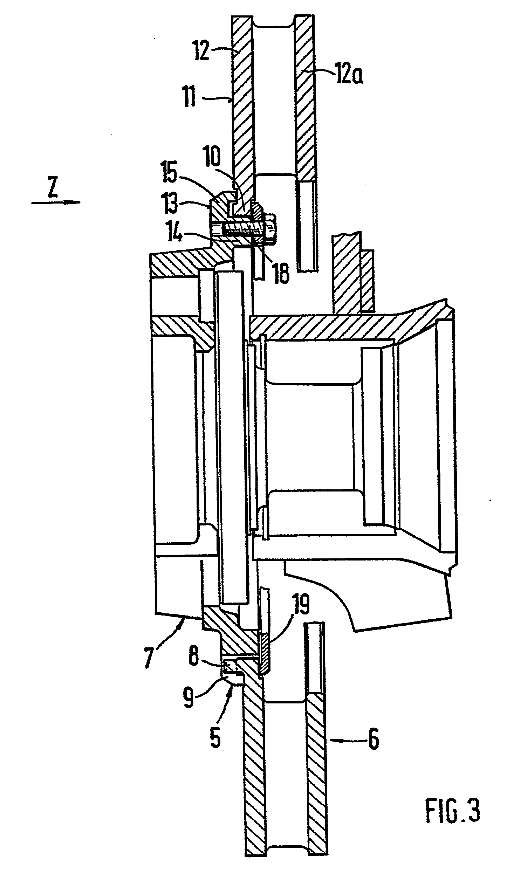

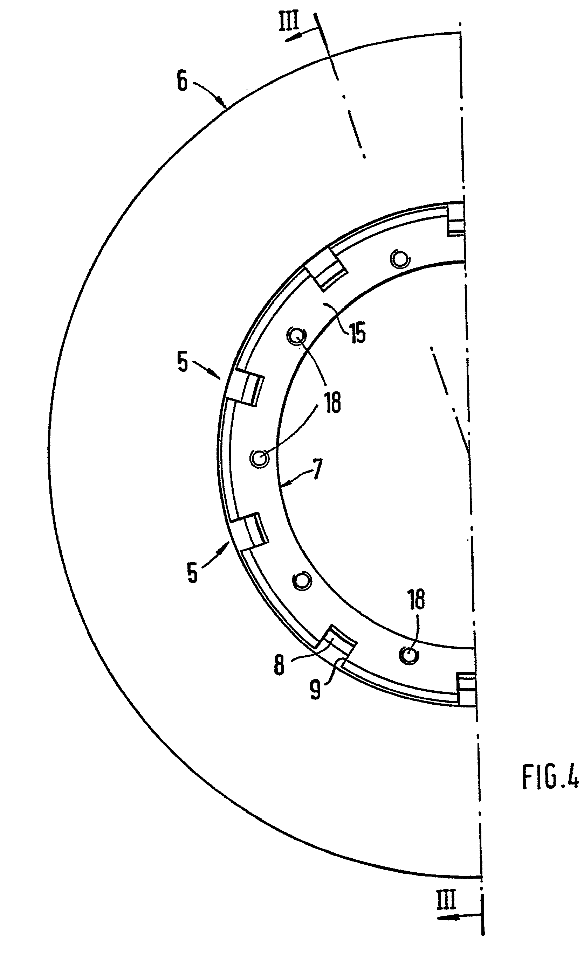

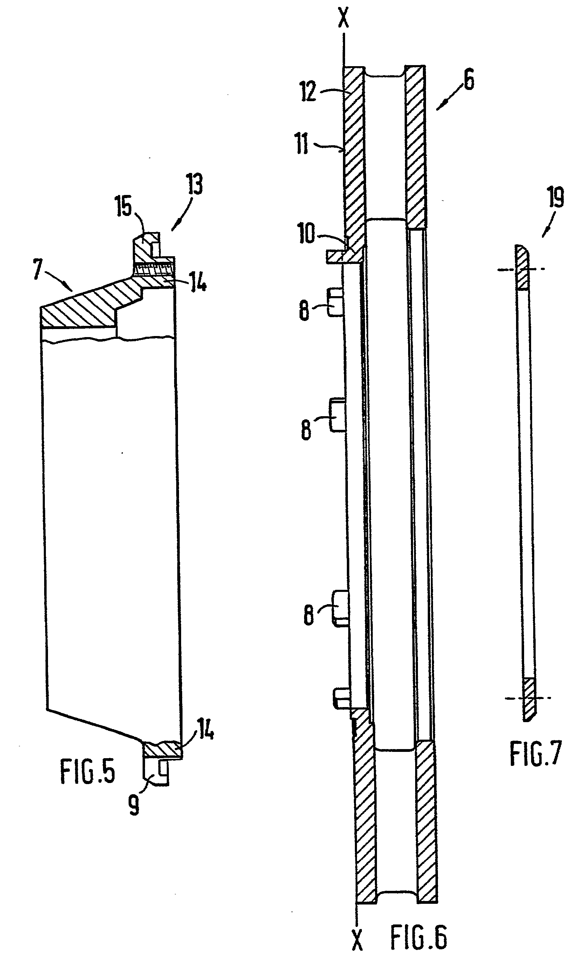

Fig. 3 einen Schnitt nach der Linie III-III der Fig. 4 durch eine Befestigungsvorrichtung,

Fig. 4 eine Ansicht auf die Bremsscheibe, in Pfeilrichtung Z gesehen,

Fig. 5 einen Vertikalschnitt durch eine Radnabe,

Fig. 6 einen Vertikalschnitt durch die Bremsscheibe,

Fig. 7 einen Vertikalschnitt durch einen Druckring und

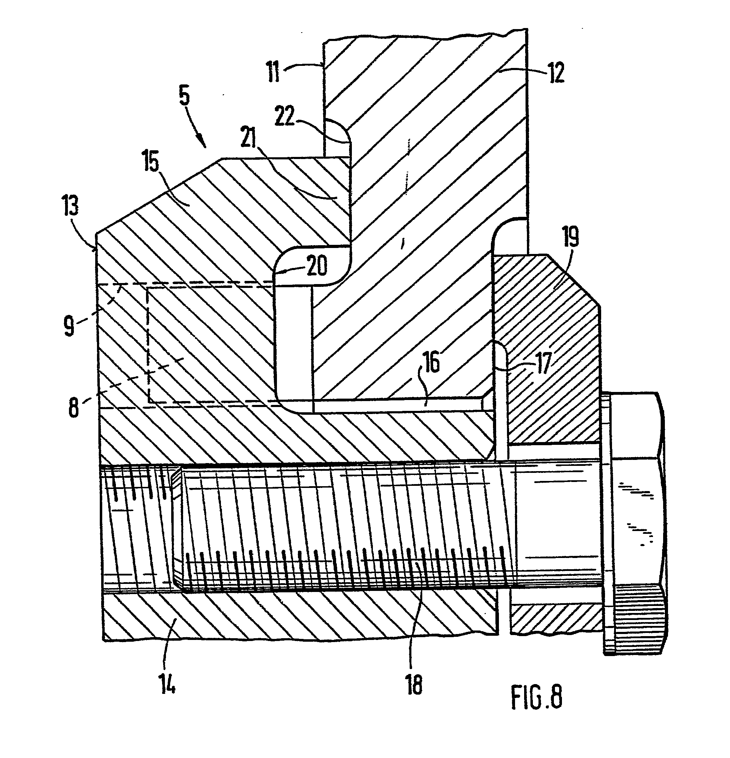

Fig. 8 eine vergrößerte Ausschnittsdarstellung des in der Öffnung der Radnabe formschlüssig gehaltenen Mitnehmers der Bremsscheibe.

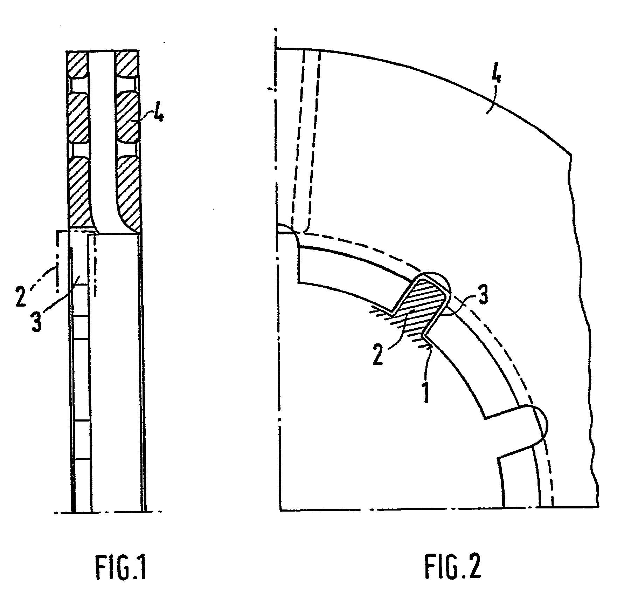

In den Fig. 1 und 2 ist eine Befestigungsvorrichtung nach dem Stand der Technik gezeigt. Diese umfaßt im wesentlichen an einer Radnabe 1 angeordnete Mitnehmer 2, welche in radial verlaufende Schlitze 3 der Bremsscheibe 4 eingreifen.

Eine neue Befestigungsvorrichtung 5 zwischen der Bremsscheibe 6 und der Radnabe 7 umfaßt im wesentlichen zapfenartige Mitnehmer 8 einer Bremsscheibe 6 und mit diesen korrespondierend angeordnete Öffnungen 9, in denen die Mitnehmer 8 formschlüssig eingreifen.

Die Mitnehmer 8 sind am inneren radialen Begrenzungsrand 10 einer Bremsfläche 11 eines Segments 12 angeformt bzw. mit angegossen. Sie erstrecken sich axial und ragen aus der Ebene X-X der Bremsfläche 11 hervor. Vorzugsweise weisen die Mitnehmer 8 in der Ebene X-X einen rechteckigen Querschnitt auf. Möglich ist aber auch eine andere geometrische Querschnittsform wie z.B. kreisförmig oder polygonal. Insbesondere sind die Mitnehmer 8 an dem der Radnabe 7 zugekehrten Segment 12 der Bremsscheibe 6 vorgesehen.

Die Radnabe 7 umfaßt einen koaxial zur Bremsscheibe 6 angeordneten randseitigen Verbindungsflansch 13. Dieser ist mit einem innenliegenden Befestigungsring 14 und einem außenliegenden Haltering 15 versehen. Die Ringe 14 und 15 sind vorzugsweise mit der Radnabe 7 einteilig ausgeführt.

Im Haltering 15 des Verbindungsflansches 13 sind für die Mitnehmer die Öffnungen 9 eingearbeitet, welche aus Schlitzen bestehen, die sich radial erstrecken und die in axialer und radialer Richtung offen sind.

Der innenliegende Befestigungsring 14 des Verbindungsflansches 13 ragt in eine zentrische Öffnung 16 des Bremsscheibensegments 12 hinein und nimmt die Bremsscheibe 6 haltend auf. Die Breite des Befestigungsringes 14 entspricht etwa der Dicke des Segments 12, so daß er bündig mit der Segmentinnenfläche 17 abschließt.

Eine feste Verbindung zwischen der Radnabe 7 und der Bremsscheibe 6 erfolgt über einen zwischen den Segmenten 12, 12a innenseitig des Segments 12 angeordneten Druckring 19, der mittels Schrauben 18 mit der Radnabe 7 unter Zwischenschaltung der Bremsscheibe 6 verbunden wird.

Die entstehenden Wärmespannungen in den Mitnahmepunkten werden dadurch vermieden, daß die im Betrieb entstehenden unterschiedlichen Bauteiltemperaturen und oftmals auch die unterschiedlichen Materialausdehnungen dadurch ausgeglichen werden, daß der Wärmeausdehnungskoeffizient der Radnabe 7 größer ist als der der Bremsscheibe 6.

Die Öffnungen 9 in der Radnabe 7 liegen vorzugsweise in einer rinnenförmigen Vertiefung 20 des Verbindungsflansches 13. Die die Öffnungen 9 umgebende radial äußere Begrenzung 21 des Verbindungsflansches 13 stützt sich in einer Nut 22 ab, so daß neben der Fixierung durch den Haltering 14 noch eine zusätzliche radiale Fixierung erfolgt.

Die Planfläche des Begrenzungsringes 21 des Verbindungsflansches 13 und die Nut 22 der Bremsscheibe 6 sind Drehkonturen, die ein Planlaufen der Bremsscheibe 6 in montiertem Zustand gewährleisten.

## Patentansprüche

1. Befestigungsvorrichtung für eine Bremsscheibe (6) mit einer Radnabe (7) eines Kraftfahrzeugs, wobei die Bremsscheibe (6) auf der Nabe (7) durch in Eingriff stehende Mitnehmer (8) gehalten und über einen an der Radnabe (7) befestigten Druckring (19) festgesetzt wird, dadurch gekennzeichnet, daß der Wärmeausdehnungskoeffizient der Radnabe (7) größer ist als der der Bremsscheibe und die Mitnehmer (8) dieser Bremsscheibe (6) am inneren radialen Begrenzungsrand (10) einer der Fahrzeugmitte zugewandten Bremsfläche (11) der Bremsscheibe (6) verteilt angeordnet sind und aus einer Ebene (X-X) dieser Fläche (11) axial hervorragen und in Öffnungen (9) der Radnabe (7) angeordnet sind und zwischen den Öffnungen (9) eine rinnenförmige Vertiefung (20) eines randseitigen Verbindungsflansches (13) vorgesehen ist, deren radial äußerer Begrenzungsring (21) in einer Nut (22) der Bremsfläche (11) abgestützt ist.

2. Vorrichtung nach Anspruch 1, dadurch gekennzeichnet, daß der Verbindungsflansch (13) der Radnabe (7) einen innenliegenden Befestigungsring (14) und einen außenliegenden Haltering (15) umfaßt, der die Öffnungen (9) aufweist, welche korrespondierend mit den Mitnehmern (8) der Bremsscheibe (6) angeordnet sind und eine klauenartige Naben-Scheiben-Verbindung bilden.

3. Vorrichtung nach den Ansprüchen 1 oder 2, dadurch gekennzeichnet, daß der Befestigungsring (14) in eine zentrische Öffnung (16) der Bremsscheibe (6) hineinragt und etwa einer Bremsscheibendicke entspricht und bündig mit der Innenfläche (17) der Bremsscheibe (6) abschließt.

4. Vorrichtung nach einem oder mehreren der vorhergehenden Ansprüche, dadurch gekennzeichnet, daß die Öffnungen (9) als radial verlaufende und nach außen hin geöffnete Schlitze ausgeführt sind.

5. Vorrichtung nach Anspruch 1, dadurch gekennzeichnet, daß zwischen Segmenten (12 und 12a) der Bremsscheibe (6) ein Druckring (19) angeordnet ist, welcher sich am Befestigungsring (14) der Radnabe (7) abstützt und mit dieser bei randseitiger Aufnahme des einen Segments (12) verbunden ist.

## Revendications

1. Dispositif de fixation pour un disque de frein (6) comportant un moyeu de roue (7) d'un véhicule automobile, le disque de frein (6) étant retenu sur le moyeu (7) par l'élément d'entraînement (8) placé en prise et fixé par l'intermédiaire d'un anneau de pression (19) fixé sur le moyeu de roue (7), caractérisé en ce que le coefficient de dilatation thermique du moyeu de roue (7) est plus élevé que celui du disque de frein, et les éléments d'entraînement (8) de ce disque de frein (6) étant disposés de manière répartie sur la bordure de limite (10) intérieure radiale d'une face de frein (11) tournée vers l'axe du véhicule et dépassant axialement hors d'un plan (X-X) de cette face (11), et disposées dans des ouvertures (9) du moyeu de roue (7), et un renfoncement (20) en forme de gouttière d'une bride de liaison (13) située du côté du bord étant prévu entre les ouvertures (9), bride dont l'anneau de limitation (21) radialement extérieur est appuyé dans une gorge (22) de la face de frein (11).

2. Dispositif selon la revendication 1, caractérisé en ce que la bride de liaison (13) du moyeu de roue (7) comporte un anneau de fixation intérieur (14) et un anneau de maintien extérieur (15), qui présente les ouvertures (9) disposées en correspondance des éléments d'entraînement (8) du disque de frein (6) et formant une liaison à griffe entre le moyeu et le disque.

3. Dispositif selon les revendications 1 ou 2, caractérisé en ce que l'anneau de fixation (14) pénètre à l'intérieur d'une ouverture (16) centrale du disque de frein (6), et correspond à peu près à une épaisseur de disque de frein, et arrive au ras de la face intérieure (17) du disque de frein (6).

4. Dispositif selon une ou plusieurs des revendications précédentes, caractérisé en ce que les ouvertures (9) sont réalisées sous la forme de fentes s'étendent radialement et ouvertes vers l'extérieur.

5. Dispositif selon la revendication 1, caractérisé en ce qu'entre les segments (12 et 12a) du disque de frein (6) est disposé un anneau de pression (19) s'appuyant sur l'anneau de fixation (14) du moyeu de roue (7) et relié à celui-ci par la réception en bordure de l'un (12) des segments.

## Claims

1. A mounting device for a brake disc (6) on a wheel hub (7) of a motor vehicle, the brake disc (6) being held on the hub (7) by engagement means (8) and being secured by way of a compression ring (19) fastened to the wheel hub (7), characterized in that the thermal expansion coefficient of the wheel hub (7) is greater than that of the brake disc, and the engagement means (8) of the said brake disc (6) are arranged distributed on the inner radial boundary edge (10) of a brake surface (11) of the brake disc (6) facing the middle of the vehicle, project axially from a plane (X-X) of the said surface (11) and are arranged in openings (9) in the wheel hub (7), and a channel-shaped depression (20) of a connexion flange (13), which is provided on the edge and whose radially outer boundary ring (21) is supported in a groove (22) in the braking surface (11), is provided between the openings (9).

2. A device according to Claim 1, characterized in that the connexion flange (13) of the wheel hub (7) comprises an inner fastening ring (14) and an outer holding ring (15) having the openings (9) which are arranged in alignment with the engagement means (8) of the brake disc (6) and form a claw-like hub-disc connexion.

3. A device according to Claim 1 or 2, characterized in that the fastening ring (14) projects into a central opening (16) of the brake disc (6) and corresponds approximately to one thickness of the brake disc and terminates flush with the inner surface (17) of the brake disc (6).

4. A device according to one or more of the preceding Claims, characterized in that the openings (9) are formed as radially extending slots which are open towards the outside.

5. A device according to Claim 1, characterized in that a compression ring (19) is arranged between segments (12 and 12a) of the brake disc (6), the compression ring (19) being supported on the fastening ring (14) of the wheel hub (7) and being connected thereto when one segment (12) is mounted at the edge of the hub.

FIG.1

FIG.2

EP 0 235 382 B1

FIG.3

FIG.4

FIG.5

FIG.6

FIG.7

FIG.8